# EUROPEAN PATENT APPLICATION

(11) **EP 2 306 584 A1**
(43) Date of publication of application: **06.04.2011**
(21) Application number: 09770172.6
(22) Date of filing: 24.06.2009
(51) Int. Cl.: H01M 14/00, H01L 31/04

(54) **METHOD FOR MANUFACTURING A PHOTOELECTRIC CONVERSION ELEMENT**

(30) Priority: 24.06.2008 JP 2008164448
(71) Applicant: Sony Corporation, Tokyo 108-0075 (JP)
(72) Inventor: SUZUKI Yusuke, Tokyo 108-0075 (JP); MOROOKA Masahiro, Tokyo 108-0075 (JP); TADA Keishi, Tokyo 108-0075 (JP); NAGANO Yasunori, Tokyo 108-0075 (JP); YONEYA Reiko, Tokyo 108-0075 (JP); ORIHASHI Masaki, Tokyo 108-0075 (JP); TAKADA Harumi, Tokyo 108-0075 (JP); ZHU Cheng, Tokyo 108-0075 (JP)
(74) Representative: Mills, Julia
(86) International application number: PCT/JP2009/061450
(87) International publication number: WO 2009/157462

(57) **Abstract**

The present invention relates to a method of manufacturing a photoelectric conversion device in which selective dye adsorption can be performed easily. In the step of a dye adsorbing process, a material unit 21 having partition walls of a predetermined shape is placed over semiconductor electrodes 12₁ to 12₃, which are a titanium oxide electrode. The material unit 21 is laminated by a UV cure adhesive. Dye solutions S₁ to S₃ obtained by dissolving each of three kinds of dyes of N719, Black dye, and D149, for example, into a CH3CN/t-BuOH mixed solution are put in each of sections divided by the partition walls. The material unit 21 is inverted in that state, and left standing still for 24 hours. Then, the adhesive is removed after passage of the 24 hours. Thus, the semiconductor electrodes 12₁ to 12₃ having regions corresponding to the sections which regions are colored with the three different kinds of dyes are obtained. The present invention is applicable to a method of manufacturing a dye sensitized solar cell.

## Description

### Technical Field

The present invention relates to a method of manufacturing a photoelectric conversion device, and particularly to a method of manufacturing a photoelectric conversion device in which selective dye adsorption can be performed easily.

### Background Art

Researches into dye sensitized solar cells as next-generation solar cells to replace a silicon (Si) type have recently been conducted widely.

The dye sensitized solar cell has features including an easy manufacturing process and an ability to be provided with design quality. As an example of design quality, a solar cell having a plurality of colors would be able to be installed without impairing the external appearance of an apparatus, an electronics device, a building or the like on which to install the solar cell, which is considered to lead to further spread of solar cells.

As for applications, the dye sensitized solar cell may be applied to for example power supplies of various electronics devices such as portable chargers, portable music players, personal computers, electronic cameras, recorders, portable telephones and the like, clocks and calculators in which silicon solar cells and the like have conventionally been used, windowpanes, and walls, as well as signs, billboards and the like placed outdoors.

The present applicant has previously proposed Patent Document 1, for example, as a method of manufacturing a dye sensitized solar cell of this kind.

In addition, an element determining a color in a dye sensitized solar cell is a dye. A process of manufacturing the dye sensitized solar cell needs a so-called selective dye adsorption technique that makes an arbitrary dye adsorbed at an arbitrary position on a nanoporous semiconductor electrode.

A method using an ink jet printer has been proposed as a method of fabricating a solar cell having a plurality of colors.

### Prior Art Document

### Patent Document

Patent Document 1: Japanese Patent Laid-Open No. 2005-259548

### Summary of the Invention

### Technical Problem

However, with the conventional techniques including Patent Document 1, it is difficult to perform selective coloring with dyes when the dyes are to be adsorbed on a semiconductor electrode. There is thus an increasing desire to perform selective dye adsorption easily.

In addition, according to the proposition to use an ink jet printer as described above, it has been reported that fine selective coloring as in a picture is possible. However, because the semiconductor electrode of a practical solar cell has a thickness of 5 µm to 30 µm, it is considered that to apply a sufficient amount of dye to the inner part of the semiconductor electrode needs a method of performing the application repeatedly, for example. This may greatly lengthen a time of occupation of the device.

The present invention has been made in view of such a situation, and is to enable selective dye adsorption to be performed easily when dyes are adsorbed on a semiconductor electrode in the manufacture of an photoelectric conversion device such as a dye sensitized solar cell or the like.

### Technical Solution

A method of manufacturing a photoelectric conversion device according to one aspect of the present invention includes: a step of placing a partition member having a partition wall of a predetermined shape over a semiconductor electrode for the photoelectric conversion device, and making predetermined dyes adsorbed by putting different dye solutions in each of sections divided by the partition wall; and a step of removing the semiconductor electrode having the dyes adsorbed in predetermined regions corresponding to the sections from the partition member after passage of a predetermined time.

The partition member has a shape of a container type having a bottom part, and in the step of making the dyes adsorbed, after the dye solutions are put in the sections of the partition member, the semiconductor electrode is placed on an opening side of the partition member, the partition member of the container type is sealed, the partition member sealed in that state is inverted, and the dyes are adsorbed in the predetermined regions on the semiconductor electrode, the predetermined regions corresponding to the sections.

The partition member has a hollow shape, and in the step of making the dyes adsorbed, the partition member is placed over the semiconductor electrode, the dye solutions are injected from an opening side of the partition member in a state in which a bottom part of the partition member is the semiconductor electrode, and the dyes are adsorbed in the predetermined regions on the semiconductor electrode, the predetermined regions corresponding to the sections.

The partition member is formed of a first partition member having a first section and the second partition member having a second section different from the first section, and in the step of making the dyes adsorbed, after a dye is adsorbed in a first region on the semiconductor electrode, the first region corresponding to the first section, by the first partition member, a dye is adsorbed in a second region different from the first region on the semiconductor electrode, the second region corresponding to the second section, by the second partition member.

The semiconductor electrode and the partition member are bonded to each other by an adhesive, or press-fitted to each other by a gasket.

The partition member and the semiconductor electrode are bonded to each other by decompressing an internal space of the partition member by a vacuum pump in a state in which the partition member is sealed.

The photoelectric conversion device is a dye sensitized solar cell.

In a method of manufacturing a photoelectric conversion device according to one aspect of the present invention, a partition member having a partition wall of a predetermined shape is placed over a semiconductor electrode for the photoelectric conversion device, predetermined dyes are adsorbed by putting different dye solutions in each of sections divided by the partition wall, and the semiconductor electrode having the dyes adsorbed in predetermined regions corresponding to the sections is removed from the partition member after passage of a predetermined time.

### Advantageous Effect

As described above, according to one aspect of the present invention, selective dye adsorption can be performed easily.

### Brief Description of Drawings

[FIG. 1]

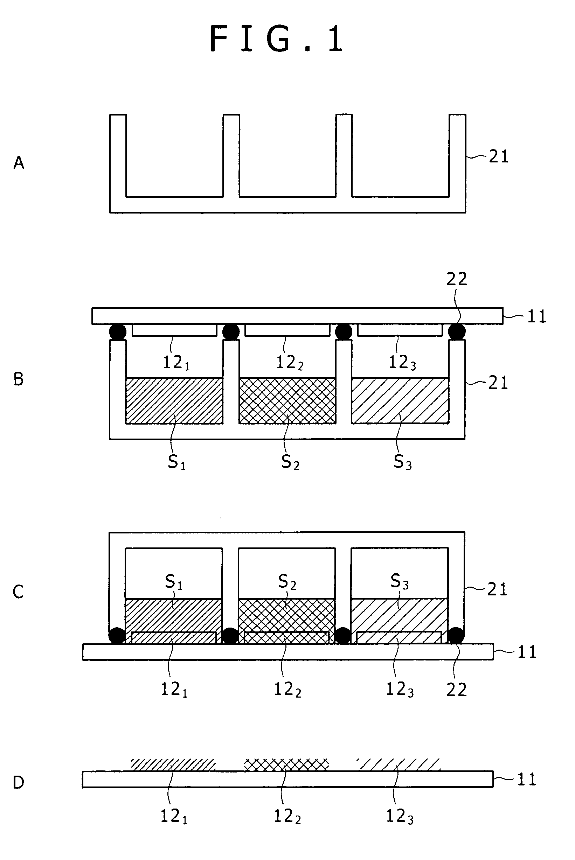

   FIG. 1 is a sectional view of assistance in explaining the step of a dye adsorbing process to which the present invention is applied.
[FIG. 2]

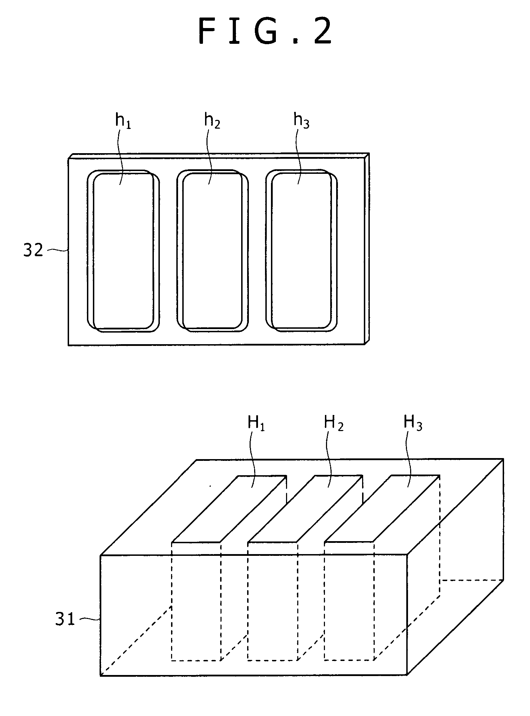

   FIG. 2 is a diagram of assistance in explaining the step of the dye adsorbing process to which the present invention is applied.
[FIG. 3]

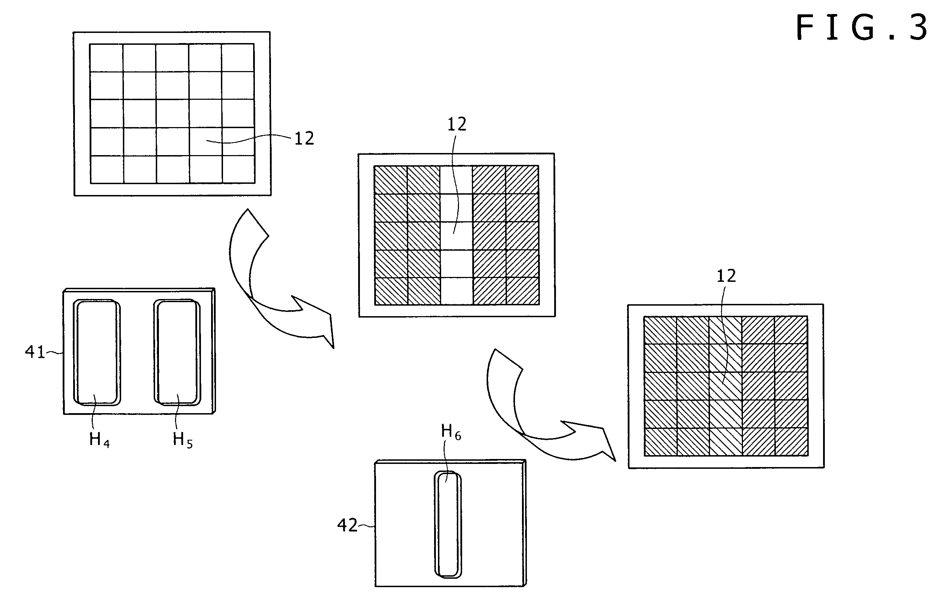

   FIG. 3 is a diagram of assistance in explaining the step of the dye adsorbing process to which the present invention is applied.

### Mode for Carrying Out the Invention

Embodiments of the present invention will hereinafter be described with reference to the drawings.

A process of manufacturing a dye sensitized solar cell is performed according to steps (1) to (7) below, for example.

(1) Laser scribing process
(2) Screen printing process
(3) Annealing process
(4) Dye adsorbing process
(5) Laminating process
(6) Electrolytic solution injecting process
(7) Injection port sealing process

To explain briefly, in such a manufacturing process, first, (1) a transparent substrate such as a conductive glass or the like is subjected to laser processing by a laser scribing process, whereby a patterned transparent substrate is obtained. Next, (2) in a screen printing process, the transparent substrate is coated with a predetermined paste by a screen printing method. Then, (3) heating and firing is performed by an annealing process at 100°C to 600°C for about one hour in an electric furnace. Thus, a semiconductor electrode is obtained.

Then, (4) in a dye adsorbing process, a predetermined dye is adsorbed on the semiconductor electrode. (5) Lamination of the semiconductor electrode to a counter electrode, an antireflection film, and the like are performed. Thereafter, (6) a predetermined electrolytic solution is injected by an electrolytic solution injecting process. (7) An injection port is sealed. Thus, a dye sensitized solar cell is obtained.

The dye sensitized solar cell is manufactured by undergoing the manufacturing processes as described above. It is difficult to perform selective dye adsorption when adsorbing a dye on the semiconductor electrode in the step of the (4) dye adsorbing process, as described in [Technical Problem]. Accordingly, a dye adsorbing process that can solve such a problem is performed in a manufacturing process to which the present invention is applied. Such a dye adsorbing process will be described in the following by citing concrete examples of [First Embodiment] to [Fifth Embodiment].

### First Embodiment

The steps (1), (2), and (3) as a stage preceding the (4) dye adsorbing process coat a commercial FTO glass (15 Ω/□) with a commercial TiO₂ paste by a screen printing process, and sinter the FTO glass for one hour at 500°C. Thus, a titanium oxide electrode (average film thickness of 20 µm) having a strip-shaped pattern is obtained.

The process next proceeds to the (4) dye adsorbing process. The process represented in a sectional view of the step of the (4) dye adsorbing process of FIG. 1 is performed. Incidentally, in FIG. 1, the strip-shaped titanium oxide electrode obtained in the steps of (1) to (3) is described as semiconductor electrodes 12₁ to 12₃.

As shown in A of FIG. 1, a material unit 21 is of a container shape (tray shape) having a bottom part. In addition, the material unit 21 has partition walls of a predetermined shape. Different dye solutions can be put in respective sections divided by the partition walls. For example, in A of FIG. 1, the material unit 21 is divided into three sections, and three different kinds of dye solutions are put in these sections. Specifically, for example, three kinds of dyes of N719, Black dye, and D149 are each dissolved in a CH3CN/t-BuOH mixed solution. Thus, 0.3-mM dye solutions (dye solutions S₁, S₂, and S₃) are obtained. Thus the dye solutions can be poured into the three respective sections of the material unit 21 in FIG. 1.

Then, as shown in B of FIG. 1, the material unit 21 is sealed by placing a transparent substrate 11 on upper edge parts (opening upper edge part side) of the partition walls of the material unit 21, in which the three different kinds of dye solutions S₁ to S₃ are put, such that a surface of the transparent substrate 11 on which surface the semiconductor electrodes 12₁ to 12₃ (titanium oxide electrode) are formed is on a lower side (material unit 21 side). At this time, the transparent substrate 11 and the material unit 21 are bonded to each other by an adhesive 22 represented by black circles in the figure. Thus, the transparent substrate 11 and the material unit 21 are laminated and fixed to each other.

Incidentally, as such a laminating method, not only a method using the adhesive 22 such as a UV cure adhesive or the like but also a press-fitting method using a material functioning as a gasket such as a silicon rubber, for example, can be used. In this case, the silicon rubber may be bonded to the material unit 21, or a sheet-shaped silicon rubber may be used. As the transparent substrate 11, for example a glass substrate of a conductive glass or the like, a transparent plastic substrate, a metallic plate or the like is used.

Inverting the sealed material unit 21 with the transparent substrate 11 and the material unit 21 bonded to each other results in a state as shown in C of FIG. 1. That is, by inverting the material unit 21, the dye solutions S₁ to S₃ on the side of the bottom part of the material unit 21 flow into the transparent substrate 11 side, and at the same time, the semiconductor electrodes 12₁ to 12₃ are filled with the dye solutions S₁ to S₃, respectively. Thus, respective dyes are adsorbed on the semiconductor electrodes 12₁ to 12₃. At this time, a dye is adsorbed on the semiconductor electrode 12₁ by the dye solution S₁, a dye is adsorbed on the semiconductor electrode 12₂ by the dye solution S₂, and a dye is adsorbed on the semiconductor electrode 12₃ by the dye solution S₃. In other words, it can be said that an arbitrary dye is adsorbed at an arbitrary position on a semiconductor electrode, and it can also be said that selective dye adsorption is made possible by merely preparing the material unit 21 and is thus easy.

Then, after left standing still as it is for 24 hours in the state of C of FIG. 1, the material unit 21 is removed from the transparent substrate 11. Thus, as shown in D of FIG. 1, the semiconductor electrodes 12₁ to 12₃ colored with different dyes by the dye solutions S₁ to S₃ are obtained on the transparent substrate 11.

Incidentally, as for the shape of the material unit 21 used in the step of the (4) dye adsorbing process, the partition walls need to have a height of at least 3 mm. This is because the amount of dyes included in the dye solutions poured on the semiconductor electrodes 12 is insufficient when the height of the partition walls is equal to or less than 3 mm. There is no particular upper limit to the height of the partition walls as long as the height of the partition walls is 3 mm or more. There is no particular limit to width of the partition walls either, but is desirably 10 mm or less in practical use. When the width of the partition walls is equal to or more than 10 mm, an area contributing to power generation in a solar cell area is reduced to a level not tolerable for practical use.

In addition, the time during which the material unit 21 is left standing still in the state of C of FIG. 1 varies depending on the film thickness of the semiconductor electrodes 12₁ to 12₃. In a case of a small film thickness, adsorption is possible in a short time of for example 10 minutes, 15 minutes, 30 minutes or the like. In a case of a large film thickness, on the other hand, adsorption takes for example 48 hours or more. Further, because the time during which the material unit 21 is left standing still is also affected by temperature, such a time is ideally determined in consideration of both the film thickness and the temperature of a place where work is performed. In addition, operations such as heating, stirring and the like may be used as required.

Then, after the (4) dye adsorbing process ends, the succeeding steps (5), (6), and (7) are performed, so that the semiconductor electrodes with the dyes obtained in the step of (4) are laminated to a platinum sputtered counter electrode by using a UV cure adhesive, and an electrolytic solution is injected therein. Thus, a dye sensitized solar cell is obtained. Thus, thereby, a dye sensitized solar cell in which predetermined dyes are adsorbed at predetermined positions is obtained.

Incidentally, not only coloring in different kinds of dyes but also coloring in different shades of one color (one kind) of a dye can be performed by using the method of this [First Embodiment]. In this case, the shades can be controlled by changing an adsorption time, the concentration of a dye solution, a kind of solvent and the like for each unit. In addition, by coloring in different colors by the material unit 21, dyes representing for example characters, numbers, symbols, or figures, or arbitrary combinations thereof can be adsorbed on the semiconductor electrodes. These are true for other embodiments to be described later.

### Second Embodiment

In the foregoing [First Embodiment], an example of using the adhesive 22 and an example of press-fitting by a gasket have been described as the method of laminating the material unit 21. However, the press-fitting method includes not only a mechanical press-fitting method but also a press-fitting method using atmospheric pressure such as laminating the material unit 21 in a vacuum and then returning the material unit 21 to atmospheric pressure.

Specifically, a material unit 21 that has partition walls in which three kinds of dye solutions S₁ to S₃ similar to those of [First Embodiment] are injected and which is provided with a silicon rubber layer on the outer circumferences of the partition walls is mechanically laminated to semiconductor electrodes 12₁ to 12₃ fabricated by a similar method to that of [First Embodiment] (steps (1) to (3)). Thereafter, the internal space of the material unit 21 set in a sealed state by being laminated is decompressed by a vacuum pump, whereby sufficient bonding is achieved. As in [First Embodiment], this material unit 21 is inverted in that state, and then left standing still for 24 hours.

Thereafter, the semiconductor electrodes 12₁ to 12₃ inverted and situated on the lower side of the material unit 21 are returned to an upper side, the inside of the material unit 21 is then returned to atmospheric pressure, and a transparent substrate 11 is removed. Thus, the semiconductor electrodes 12₁ to 12₃ selectively colored with three kinds of dyes are obtained. Thereafter, the semiconductor electrodes with the dyes are laminated to a platinum sputtered counter electrode by using a UV cure adhesive and an electrolytic solution is injected by a similar method to that of [First Embodiment] (steps (5), (6), and (7)). Thus, a dye sensitized solar cell is obtained.

### Third Embodiment

In the foregoing [First Embodiment], description has been made of a constitution in which dyes are adsorbed on the semiconductor electrodes 12₁ to 12₃ by inverting the material unit 21 in FIG. 1. However, dyes can be adsorbed without the member being inverted by using a material unit 31 in FIG. 2. Incidentally, in FIG. 2, a diagram on a lower side is a perspective view of the material unit 31, and a diagram on an upper side is a top view of a silicon rubber 32.

Specifically, the material unit 31 having a hollow shape is mechanically press-fitted to semiconductor electrodes 12₁ to 12₃ fabricated by a similar method to that of [First Embodiment] (steps (1) to (3)) via the silicon rubber 32 having hole parts h₁ to h₃ corresponding to the hollow parts H₁ to H₃ of the material unit 31. That is, at this time, the semiconductor electrodes 12₁ to 12₃ are situated at the bottom part of the material unit 31 having the hollow shape. Thereafter, when three kinds of dye solutions S₁ to S₃ similar to those of [First Embodiment] are injected into the three respective hollow parts H₁ to H₃ provided in the material unit 31, dyes are adsorbed on the semiconductor electrodes 12₁ to 12₃ press-fitted as the bottom part of the material unit 31 via the silicon rubber 32.

Then, by being left standing still as it is for 24 hours, the semiconductor electrodes 12₁ to 12₃ corresponding to the hollow shape of the material unit 31 and colored with the three different kinds of dyes are obtained. Then, the semiconductor electrodes with the dyes are laminated to a platinum sputtered counter electrode by using a UV cure adhesive and an electrolytic solution is injected by a similar method to that of [First Embodiment] (steps (5), (6), and (7)). Thus, a dye sensitized solar cell is obtained.

### Fourth Embodiment

While dye adsorptions are all performed at a time in the foregoing [First Embodiment], these dye adsorptions can be performed a plurality of divided times. In the following, referring to FIG. 3, description will be made by taking as an example a case where titanium oxide electrodes are obtained on one surface of 5 cm × 5 cm by a similar method to that of [First Embodiment], for example.

Incidentally, in FIG. 3, a titanium oxide electrode obtained by similar steps (1) to (3) to those of [First Embodiment] is described as a semiconductor electrode 12 formed of 5 × 5 squares in the form of a lattice corresponding to a size of 5 cm × 5 cm of the titanium oxide electrode (one square is one centimeter square). FIG. 3 shows top views of a material unit 41, a material unit 42, and the semiconductor electrode 12. As indicated by arrows in the figure, the semiconductor electrode 12 is arranged in time series in a direction from an upper left in the figure to a lower right in the figure. Accordingly, description will be made referring to three states of the semiconductor electrode 12 arranged in time series from the upper left in FIG. 3 to the lower right in FIG. 3 as a first state, a second state, and a third state, respectively, in order from the upper left in the figure.

In this case, as shown in FIG. 3, of the material unit 41 having the shape of a first pattern (a hole part H₄ and a hole part H₅ in FIG. 3) and the material unit 42 having the shape of a second pattern (a hole part H₆ in FIG. 3) different from the first pattern, the material unit 41 is first placed on the semiconductor electrode 12 in the first state.

Then, dye solutions S₁ and S₂ are respectively injected into squares of a first column and a second column from the left in the figure and squares of a fourth column and a fifth column from the left in the figure situated at positions corresponding to the hole part H₄ and the hole part H₅ provided in the material unit 41 among the 5 × 5 squares on the semiconductor electrode 12 in the first state obtained by steps (1) to (3). More specifically, after the material unit 41 is laminated to the semiconductor electrode 12, the dye solutions S₁ and S₂ of N719 and Black dye are injected into the hole part H₄ and the hole part H₅, respectively, and left standing still as they are for 24 hours. Thus, the dyes of shapes corresponding to the hole part H₄ and the hole part H₅ of the material unit 41 are adsorbed on the semiconductor electrode 12.

Then, by removing the material unit 41, as shown in the semiconductor electrode 12 in the second state in FIG. 3, a dye is adsorbed on the squares of the first and second columns (a region on the squares represented by hatching downward to the right in the figure) by the dye solution S₁, and a dye is adsorbed on the squares of the fourth and fifth columns (a region on the squares represented by hatching downward to the left in the figure) by the dye solution S₂. At this time, as is understood also from the semiconductor electrode 12 in the second state, no dye is adsorbed on the squares of the third column in the middle.

Next, using the material unit 42, a predetermined dye is adsorbed on the remaining third column in the middle in the semiconductor electrode 12. Specifically, after being rinsed by using acetonitrile, the material unit 42 is laminated to the semiconductor electrode 12. A dye solution S₃ of D149 is injected into the hole part H₆ and left standing still as it is for 24 hours. Thus, a dye of a shape corresponding to the hole part H₆ of the material unit 42 is adsorbed on the semiconductor electrode 12.

Then, by removing the material unit 42, as shown in the semiconductor electrode 12 in the third state in FIG. 3, the dye is adsorbed on the squares of the third column (a region on the squares represented by wide hatching downward to the right in the figure) by the dye solution S₃. That is, the semiconductor electrode 12 colored with the three different kinds of dyes is obtained by selective dye adsorption in two stages using the material unit 41 and the material unit 42.

Thereafter, the semiconductor electrode with the dye is laminated to a platinum sputtered counter electrode by using a UV cure adhesive and an electrolytic solution is injected by a similar method to that of [First Embodiment] (steps (5), (6), and (7)). Thus, a dye sensitized solar cell is obtained.

Thus, when dyes are adsorbed, it is possible not only to make the whole of the dyes adsorbed at a time but also to make parts of the dyes adsorbed in separate stages. Therefore, even in a case where sections for selective coloring are adjacent to each other or are not separated from each other sufficiently to provide a partition wall, for example, selective dye adsorption can be performed easily by adsorption in several separate stages as in [Fourth Embodiment].

### Fifth Embodiment

In the foregoing [First Embodiment] to [Fourth Embodiment], description has been made of an example in which the step of the (4) dye adsorbing process is performed on a titanium oxide electrode fabricated by the steps (1) to (3) described in [First Embodiment]. However, the titanium oxide electrode may be fabricated by another method.

Specifically, in the steps (1) to (3) as steps preceding the (4) dye adsorbing process, a commercial titanium oxide P25 is dispersed by 20 wt% into gamma-butyrolactone, and further 30 wt% of a PVDF-HFP (polyvinylidene fluoride-hexafluoropropylene) copolymer is added to the titanium oxide, which is stirred while heated to about 60°C. Thus, a uniform solution is obtained. This solution is applied onto a PEN substrate with an ITO by a blade coating method, and is dried for one hour at 120°C. Further, this substrate is pressed by using a roll press machine. Thus, a titanium oxide electrode of 5 cm × 5 cm is obtained on the PEN substrate.

Then, this titanium oxide electrode is for example processed by a similar method to that of the foregoing [Fourth Embodiment]. Thus, the titanium oxide electrode colored with three different kinds of dyes is obtained. Thereafter, the titanium oxide electrode is processed by a similar method to that of [First Embodiment] (steps (5), (6), and (7)). Thus, a dye sensitized solar cell is obtained. That is, in this [Fifth Embodiment], the titanium oxide electrode is formed on a flexible substrate such for example as the PEN substrate, and therefore a dye sensitized solar cell providing higher flexibility can be fabricated.

As described above, one of the processes described in the foregoing [First Embodiment] to [Fifth Embodiment] is performed in the (4) dye adsorbing process among the steps (1) to (7) of the process of manufacturing a dye sensitized solar cell, and the dye sensitized solar cell is manufactured by undergoing these steps.

Thus, according to the present invention, selective dye adsorption can be performed easily when a dye is adsorbed on a semiconductor electrode in manufacturing an photoelectric conversion device such as a dye sensitized solar cell or the like.

It is to be noted that embodiments of the present invention are not limited to the embodiments described above, but various changes can be made without departing from the spirit of the present invention. For example, numerical values, structures, shapes, materials, raw materials, processes and the like cited in the embodiments are a mere example, and numerical values, structures, shapes, materials, raw materials, and processes that are different from the numerical values, the structures, the shapes, the materials, the raw materials, and the processes cited in the embodiments may be used as required.

In addition, while the embodiments have been described by taking as an example a dye sensitized solar cell as a photoelectric conversion device, the present invention is also applicable to solar cells of other than the dye sensitized type and photoelectric conversion devices other than solar cells.

### Explanation of Reference Symbols

11 Transparent substrate, 12₁ to 12₃ and 12 Semiconductor electrode, 21 Material unit, 22 Adhesive, 31 Material unit, 32 Silicon rubber, 41 Material unit, 42 Material unit, S₁ to S₃ Dye solution, H₁ to H₃ Hollow part, h₁ to h₃ Hole part, and H₄ to H₆ Hole part.

## Claims

1. A method of manufacturing a photoelectric conversion device, said method comprising:
a step of placing a partition member having a partition wall of a predetermined shape over a semiconductor electrode for the photoelectric conversion device, and making predetermined dyes adsorbed by putting different dye solutions in each of sections divided by said partition wall; and
a step of removing said semiconductor electrode having said dyes adsorbed in predetermined regions corresponding to said sections from said partition member after passage of a predetermined time.

2. The method of manufacturing the photoelectric conversion device according to claim 1,
wherein said partition member has a shape of a container type having a bottom part, and
in the step of making said dyes adsorbed, after said dye solutions are put in said sections of said partition member, said semiconductor electrode is placed on an opening side of said partition member, said partition member of the container type is sealed, said partition member sealed in that state is inverted, and the dyes are adsorbed in the predetermined regions on said semiconductor electrode, the predetermined regions corresponding to said sections.

3. The method of manufacturing the photoelectric conversion device according to claim 1,
wherein said partition member has a hollow shape, and
in the step of making said dyes adsorbed, said partition member is placed over said semiconductor electrode, said dye solutions are injected from an opening side of said partition member in a state in which a bottom part of said partition member is said semiconductor electrode, and the dyes are adsorbed in the predetermined regions on said semiconductor electrode, the predetermined regions corresponding to said sections.

4. The method of manufacturing the photoelectric conversion device according to claim 1,
wherein said partition member is formed of a first partition member having a first section and said second partition member having a second section different from said first section, and
in the step of making said dyes adsorbed, after a dye is adsorbed in a first region on said semiconductor electrode, the first region corresponding to said first section, by said first partition member, a dye is adsorbed in a second region different from said first region on said semiconductor electrode, the second region corresponding to said second section, by said second partition member.

5. The method of manufacturing the photoelectric conversion device according to claim 1,
wherein said semiconductor electrode and said partition member are bonded to each other by an adhesive, or press-fitted to each other by a gasket.

6. The method of manufacturing the photoelectric conversion device according to claim 2,
wherein said partition member and said semiconductor electrode are bonded to each other by decompressing an internal space of said partition member by a vacuum pump in a state in which said partition member is sealed.

7. The method of manufacturing the photoelectric conversion device according to claim 1,
wherein said photoelectric conversion device is a dye sensitized solar cell.
